# EUROPEAN PATENT APPLICATION

(11) **EP 4 563 454 A1**
(43) Date of publication of application: **04.06.2025**
(21) Application number: 23845752.7
(22) Date of filing: 15.03.2023
(51) Int. Cl.: B63B 35/44, B63B 35/38

(54) **FLOATING SYSTEM FOR PHOTOVOLTAIC PANELS AND FLOATING INSTALLATION COMPRISING SEVERAL FLOATING SYSTEMS FOR PHOTOVOLTAIC PANELS**

(30) Priority: 26.07.2022 ES 202231240 U
(71) Applicant: Isigenere, S.L., 03460 Beneixama (ES)
(72) Inventor: PONS PUIG, Emilio, 03460 Beneixama (Alicante) (ES); FERRERO SILVESTRE, Vicente, 03460 Beneixama (Alicante) (ES); REDÓN SANTAFÉ, Miguel, 03460 Beneixama (Alicante) (ES)
(74) Representative: Elzaburu S.L.P.
(86) International application number: PCT/ES2023/070153
(87) International publication number: WO 2024/023374

(57) **Abstract**

Floating system (1) for photovoltaic panels (14), comprising two assembled floats (2), each float (2) having a substantially rectangular shape, and wherein each float (2) comprises:
- several flanges (3, 4) protruding from one side of the float (2), two of them being end flanges (3) and one being a central flange (4), the central flange (4) being at a different level than the other two, and each flange (3, 4) comprising at least one through hole (5),
- a pair of first slits (6) with a through hole (7), each of them on a corner of the side opposite to the side comprising the flanges (3, 4), the side comprising the slits (6) being adjacent to a side frame area (8), and
- several second recesses (9) on the other two sides of the contour of the float (2),
so that the floats (2) are assembled by the flanges (3, 4) and by means of fastening means (10) which pass through the through holes (5) in the flanges (3, 4) to form the floating system (1).

## Description

### Field of the invention

The present invention relates to a floating system for photovoltaic panels, which serves as a support for photovoltaic panels and can be installed on water or any other liquid medium. It also relates to a floating installation comprising several floating systems for photovoltaic panels.

### Background to the invention

There are numerous systems in the prior art consisting of devices that support photovoltaic panels.

Regarding photovoltaic installations on ground or flat roofs, there are prior art documents, such as WO2010097406A2, EP833098A1 or DE102008055627A1, which describe plastic shell-shaped devices with different inclinations on which the photovoltaic panel is placed on top. The connection to the support medium requires the design of different complementary foundation systems that firmly connect the shell-type structures by means of fixed metal anchors.

In the field of floating installations, the state of the art includes previous documents such as US20140224165A1, EP2549551B1, WO2010064105A2, ES2178516B1 or ES2366960T3. In general, they consist of a floating element of different geometries resolved by means of a hollow and closed plastic part. In the upper part, one or more photovoltaic panels are supported on a metallic or plastic auxiliary structure with different degrees of continuity with the lower float.

Spanish utility model ES1143535U describes a modular float, which can be used in floating solar photovoltaic installations and which is nestable due to its concave geometry and open at the top. The union of two plastic modular floats supports both a photovoltaic solar energy module and a plastic or metal top cover by means of specific fastenings on the long and short sides, thus creating a closed, watertight and passable floating unit. This invention also makes it possible to form floating assemblies with several modular floats with photovoltaic modules surrounded by walkway floats, which act as a walkable access path in these installations.

These floating assemblies with walkway have the disadvantage of requiring many individual floats, as some floats serve to support the solar panel, and other floats serve exclusively as a walkway or passageway.

There is therefore a need for a simpler floating system for photovoltaic panels with a walkway, which at the same time does not lose consistency in the joints between the floats that make up the system.

### Summary of the invention

The object of the present invention is therefore to provide a floating system for photovoltaic panels which can overcome the drawbacks of the prior art.

The invention provides a floating system for photovoltaic panels comprising two assembled floats, each float having a substantially rectangular shape, wherein each float comprises:
- several flanges projecting from one side of the float, two of them being end flanges and one being a central flange, the central flange being at a different level from the other two, and each flange comprising at least one through hole,
- a pair of first recesses with a through hole, each on a corner of the side opposite to that comprising the flanges, the side comprising the recesses being adjacent to a side frame area, and
- several second recesses on the other two sides of the float contour,
so that the floats are assembled by the flanges and by means of fastening means which pass through the through holes in the flanges to form the floating system.

This configuration achieves a consistent union of the two assembled floats that form the floating system for photovoltaic panels and a floating installation with a walkway as a walkable path between the photovoltaic panels without the need for additional floats for the walkway.

Another advantage of the invention is that it is fully modular, so that installations of the desired surface area can be achieved by assembling several floating systems for photovoltaic panels of the invention.

Other advantageous embodiments of the invention are set out in the dependent claims.

### Brief description of the drawings

In the following, the subject matter of the present invention will be illustrated in a non-limiting manner by reference to the accompanying drawings, wherein:
Figure 1 shows a floating system for photovoltaic panels of the invention, with two coupled floats.
Figure 2 shows the floating system for photovoltaic panels of the invention, with the two floats before coupling.
Figure 3 shows a float of a floating system for photovoltaic panels of the invention of figure 1.
Figure 4 shows a floating installation for photovoltaic panels consisting of several floating systems of figure 1 assembled and with the photovoltaic panels placed on top of them.
Figure 5 shows a connecting element of the floating installation for photovoltaic panels.
Figure 6 shows a detail of the cross-section of the connection between two floats.

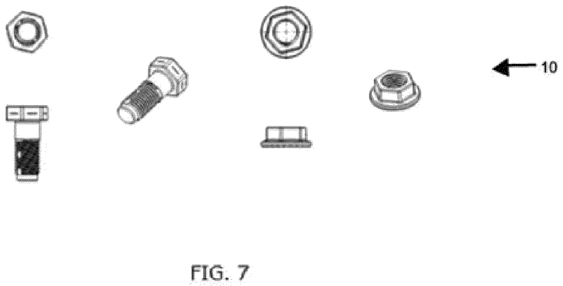

Figure 7 shows connecting means consisting of bolt and nut.
Figure 8 shows a fastening element consisting of a clamp on a float for attaching a photovoltaic panel.
Figure 9 shows a perspective view of a fastening element consisting of a clamp.

### Detailed description of the invention

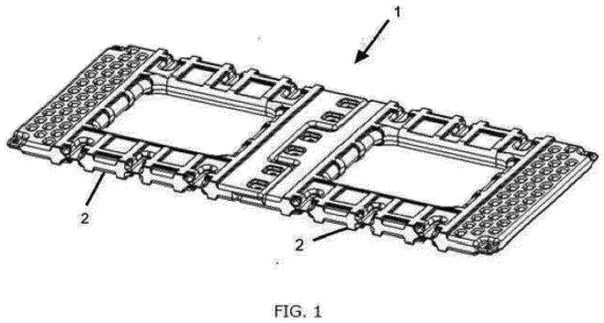

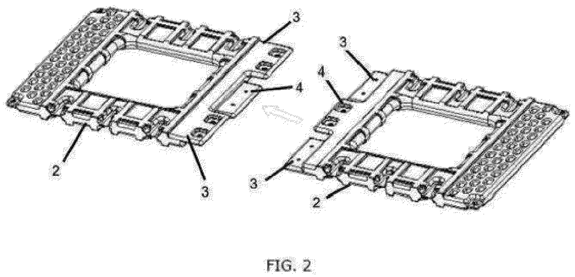

Figure 1 shows a floating system 1 for photovoltaic panels 14, with two floats 2 assembled together. Figure 2 shows each of these floats 2 independently, before being joined together to form the floating system 1.

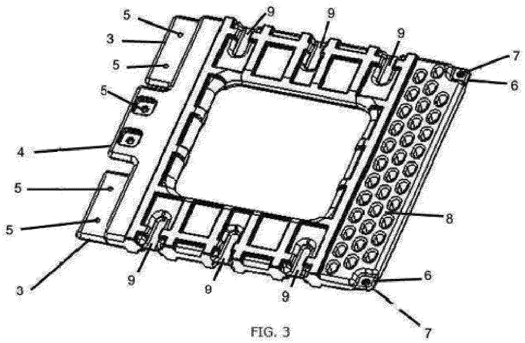

Figure 3 shows one of these floats 2 in isolation. As can be seen, this float 2 is substantially rectangular in shape and comprises:
- several flanges 3, 4 protruding from one side of the float 2, two of them being end flanges 3 and one being a central flange 4, the central flange 4 being at a different level from the other two, and each flange 3, 4 comprising at least one through hole 5 (in the embodiment of the figure , each flange 3, 4 has two through holes 5),
- a pair of first recesses 6 with a through hole 7, each on a corner of the side opposite to the side comprising the flanges 3, 4, the side comprising the recesses 6 being adjacent to a side frame-like area 8, and
- several second recesses 9 on the other two sides of the contour of the float 2.

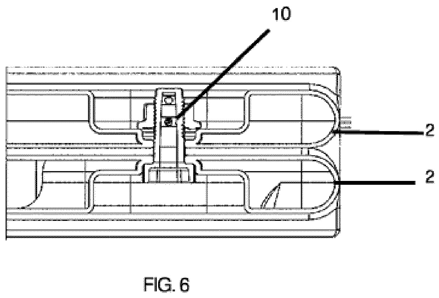

Figures 1 and 2 show that the floats 2 can be assembled together by the flanges 3, 4 and by means of fastening means 10 through the through holes 5 of the flanges 3, 4. These fastening means 10 are shown in detail in figure 6.

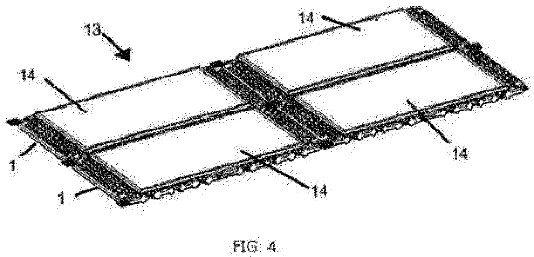

Figure 4 shows a floating installation 13 for photovoltaic panels 14 consisting of several floating systems 1 of figure 1 assembled and with the photovoltaic panels 14 already placed on them. The floating systems 1 constituting the installation 13 are provided with connecting elements 12 and fastening means 10 in the recesses 6 located at their corners, so that they join these floating systems 1 together to form the floating installation 13 as a whole.

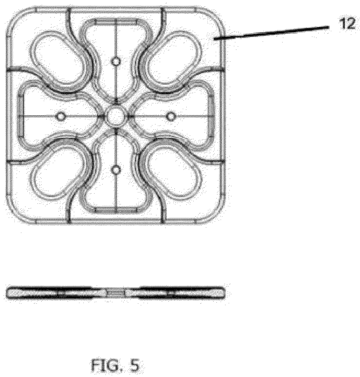

One such connecting element 12 linking the floating systems 1 is shown in figure 5.

The floating installation 13 makes it possible to form a walkway that acts as a walkable path from the floats 2 that form the floating system 1, without the need for floats or other additional elements. In fact, between the photovoltaic panels 14 are the side frames 8 of each float 2, which constitute an area of a certain width walkable between the panels 14.

Figure 6 shows the connection between two floats 2, with a fastening means 10 which can be, for example, a screw and nut assembly. It could also optionally be elastic fastening bands.

The floating installation 13 may additionally comprise a mooring and a rigid anchorage for anchoring the installation 13 to the bottom of the medium in which it is located or to the outside of the medium (e.g. to anchor it to the ground). The moorings are a set of elements that connect the floating units on the perimeter of the plant with the bottom anchorage. They are composed of ropes and elastic moorings. The rigid anchorage is an element capable of anchoring the floating installation 13 to the bed of the body of water or to the outside of the body of water.

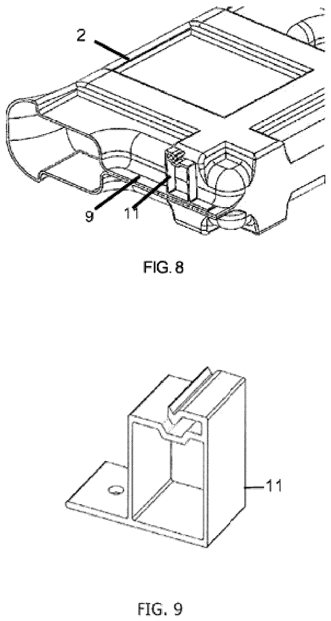

Figure 8 shows a second slit 9 of the float 2 on which a clamp is placed as a fastening element 11 for the photovoltaic panels 14 on this second slit 9. This clamp is shown in more detail in figure 9.

As for floats 2, the material used to manufacture them can be High Density Polyethylene (HDPE), composites and recycled HDPE with cork-based composites. These are thermoplastic polymers that combine stability between the necessary mechanical and strength properties and the technical aspects for the production of floats 2.

The technique used to manufacture these floats 2 is extrusion blow moulding, a polymer manufacturing process by which hollow articles are obtained by expanding the material. This process is also commonly used to produce large bottles, jerry cans, drums or slides and tanks.

The choice of this process is confirmed by the main advantages it offers:
- Low-cost tools and moulds.
- Production at fast speeds.
- Ability to manufacture complex parts.

Injection moulding can also be used to form a composite part from two single welded parts.

The geometry of the main float 2 has been defined in order to meet the technical requirements and to take into account the dimensions of the new series of large photovoltaic panels 14.

Firstly, the dimensions of 1550x1400x80 mm have been considered for the parallelepiped, the origin of the design of float 2.

Next, three flanges are cut out, two on one side and one on the opposite side, so that two floats 2 can be assembled together and turned around to form the floating system 1. The six cavities (holes 5) for fastening the two floats 2 by means of bolts and nuts are manufactured.

On the other hand, a pair of first slits 6 are made in each float 2, each of them on a corner of the side opposite to the one comprising the flanges 3, 4. In this way, we can insert a connecting element 12 to link different floating systems 1 (see Figure 4). In addition, a through hole 7 is provided so that fastening elements, such as screws, can be inserted and fully secured.

A grid of supports for the photovoltaic panel 14 can also be added, for example, at a height of 15 mm at the top and bottom of the part. These supports, oriented vertically and horizontally, will help the photovoltaic panel 14 to rest on the float 2, thus helping to spread the load over the entire float 2.

There are also a series of second recesses 9 for the positioning of the fixing clamps of the photovoltaic panel 14. These are a total of six cavities arranged on the other two sides of the contour of the float 2 other than where the flanges 3, 4 and the first recesses 6 are located. This allows the clamps to be distributed, and the float 2 to be drilled, to be able to rivet them to the float 2.

The connecting elements 12 (Figure 5) are the elements capable of joining different floating systems 1 together to form the floating installation 13 as a whole. These connecting elements 12 must be partially flexible in order to adapt to the sheet of water and waves, if necessary.

The connecting elements 12, made of thermoplastic material of the polyamide type, are placed at the four ends of each floating system 1, in the recess 6 of the float 2 prepared for attachment. With the help of screws and nuts, the connecting elements 12 are fastened to the floats 2 to join them together to form the floating system 13 for photovoltaic panels 14.

The dimensions of the connecting elements 12 have been designed to be able to attach up to four floating units (floats 2). Moreover, their geometry allows them to be coupled to the recess 6 of the float 2. In addition, the corners have been reinforced to stiffen the most heavily loaded points.

The bolts and nuts are used to join the two floats 2 of the same floating system 1. In this way, the floating system 1 is rigid and completely solid to support the photovoltaic panels 14.

The screws are designed so that they can also attach floats 2 of different floating systems 1 of the invention by means of the connecting elements 12 described above, thus making it possible to form the floating installation 13 as a whole.

These polyamide screws and clamps are placed in the through holes 5 of the float 2 located in the flanges 3, 4 on which the two floats 2 of the same floating system 1 are fastened. These through holes 5 facilitate the insertion of the screw from one direction as well as from the opposite direction, thus facilitating their assembly. On the other hand, in order to join different floating systems 1, there are also through holes 7 in the outer corners of the float 2, into which the bolts and nuts are inserted to secure the union.

The dimensions of the bolts and nuts have been designed in such a way that standardised bolts and nuts can be used.

The fixings of the photovoltaic panel 14, which support it from the float 2 of the floating system 1, can be made of extruded aluminium (alloy 6063) so that they are machined and cut to form so-called clamps. These clamps can also be thermoplastic (e.g. pa6 with or without fibre). They fulfil various functions in addition to the actual support of the photovoltaic panel 14, such as stiffening the floating system 1 or resistance to wind action.

In addition, a clamp has been designed to hold the photovoltaic panel 14 without inclination, i.e. at 0°. However, it is possible to create a second clamp in order to have an alternative with inclination, using the same float system 1. To be able to do this, the height of the clamps on one side of the main float must be greater than the clamps on the other side. In this way, the part with the higher clamps will raise one of the long sides of the module and the part with the standard clamps will leave the opposite side of the panel at the same level as float 2.

These clamps are placed over the second recesses 9 of the float as shown in Figure 8. In addition, the eight clamps supporting each module are attached to the float 2 by a fastening system, which can be a stainless steel rivet, screws, etc.

The dimensions of the clamp are designed so that the floating system 1 can accommodate different sizes of photovoltaic panels 14, and at the same time have a good response to the resulting forces.

Although some embodiments of the invention have been described and depicted, it is clear that modifications within the scope of the invention may be made thereto, and the scope of the invention is not to be considered as limited to these embodiments, but only to the content of the following claims.

## Claims

1. Floating system (1) for photovoltaic panels (14), comprising two assembled floats (2), each float (2) having a substantially rectangular shape, **characterised in that** each float (2) comprises:
- several flanges (3, 4) protruding from one side of the float (2), two of them being end flanges (3) and one being a central flange (4), the central flange (4) being at a different level than the other two, and each flange (3, 4) comprising at least one through hole (5),
- a pair of first slits (6) with a through hole (7), each of them on a corner of the side opposite to the side comprising the flanges (3, 4), the side comprising the slits (6) being adjacent to a side frame-like area (8), and
- several second recesses (9) on the other two sides of the contour of the float (2),
so that the floats (2) are assembled by the flanges (3, 4) and by means of fastening means (10) which pass through the through holes (5) in the flanges (3, 4) to form the floating system (1).

2. Floating system (1) for photovoltaic panels (14), according to claim 1, additionally comprising fastening elements (11) for the photovoltaic panels (14) on the second recesses (9).

3. Floating system (1) for photovoltaic panels (14), according to any of the previous claims, wherein the floats (2) are made of a polymeric material.

4. Floating system (1) for photovoltaic panels (14), according to claim 3, in which the floats (2) can be made of High Density Polyethylene - HDPE, composites or recycled HDPE with cork-based composites.

5. Floating system (1) for photovoltaic panels (14), according to any of the previous claims, wherein the fastening means (10) that pass through the through holes (5) of the flanges (3, 4) are screw and nut assemblies.

6. Floating system (1) for photovoltaic panels (14) according to claim 5, wherein the screw and nut assemblies are made of polyamide.

7. Floating system (1) for photovoltaic panels (14), according to any of the previous claims, wherein the fastening elements (11) for the photovoltaic panels (14) are clamps.

8. Floating system (1) for photovoltaic panels (14) according to claim 7, wherein the clamps are extruded aluminium profiles.

9. Floating installation (13) for photovoltaic panels (14), comprising at least two floating systems (1) for photovoltaic panels (14) of any of claims 1 to 8, **characterised in that** the floating systems (1) are provided with connecting elements (12) and fastening means (10) in the recesses (6) located in their corners, so that they join the floating systems (1) together to form the floating installation (13) as a whole.

10. Floating installation (13) for photovoltaic panels (14) according to claim 9, wherein the connecting elements (12) are made of polyamide.

11. Floating installation (13) for photovoltaic panels (14) according to claim 9 or 10, wherein the connecting elements (12) have reinforced corners.

12. Floating installation (13) for photovoltaic panels (14) according to claim 9, 10 or 11, wherein the fastening means (10) are screw and nut assemblies.

13. Floating installation (13) for photovoltaic panels (14) according to claim 12, wherein the screw and nut assemblies are made of polyamide.

14. Floating installation (13) for photovoltaic panels (14), according to any of claims 9 to 13, which additionally comprises a mooring and a rigid anchorage for anchoring the installation (13) to the bottom of the medium in which it is located or to the outside of said medium.
